# EUROPÄISCHE PATENTSCHRIFT

(11) **EP 2 479 124 B1**
(45) Veröffentlichungstag und Bekanntmachung des Hinweises auf die Patenterteilung: **19.06.2013**
(21) Anmeldenummer: 12455002.1
(22) Anmeldetag: 05.01.2012
(51) Int. Cl.: B65G 45/12

(54) **Abstreifer für ein Förderband**
Scraper for a conveyor belt
Racleur pour une bande de convoyage

(30) Priorität: 19.01.2011 AT 722011
(43) Veröffentlichungstag der Anmeldung: 25.07.2012
(73) Patentinhaber: Hoessl GmbH, 4210 Gallneukirchen (AT)
(72) Erfinder: Hoessl, Peter, 4210 Gallneukirchen (AT)
(74) Vertreter: Hübscher, Helmut

(56) Entgegenhaltungen:
- NL-A- 7 200 887
- US-A- 3 504 786

## Beschreibung

Die Erfindung bezieht sich auf einen Abstreifer für ein Förderband mit einem quer zum Förderband verlaufenden Träger für in Trägerlängsrichtung nebeneinandergereihte Baueinheiten aus je einem Steg und vom Steg abstehenden, in Trägerlängsrichtung nebeneinandergereihten, biegeelastischen Abstreiffingern.

Abstreifer insbesondere für Steilförderbänder, also für Förderbänder, die zur Mitnahme des Förderguts mit Querstollen oder -stegen versehen sind, müssen besonderen Anforderungen entsprechen, weil sie über die Querstollen und - stege hinweg bewegt werden. Um das dafür notwendige Biegeverhalten sicherzustellen, ist es bekannt (US 6 481 562 B2), einen Steg und vom Steg abstehende, biegeelastische Abstreiffinger umfassende Baueinheiten vorzusehen, die beispielsweise durch eine von einer Seite her eingeschnittene Polyurethanplatte gebildet werden, und mehrere dieser Baueinheiten zum Abstreifer nebeneinandergereiht auf einem Träger zu befestigen, über den die Abstreiffinger an das Förderband angestellt werden. Da sich im Abstreifbereich zwischen den einzelnen Abstreiffingern kein die Abstreifwirkung beeinträchtigender Spalt ergeben soll, ist jedoch damit zu rechnen, dass das Biegeverhalten der einzelnen Abstreiffinger aufgrund der Reibungsverhältnisse zwischen ihnen von den anliegenden Abstreiffingern mitbestimmt wird, was die Reinigungswirkung solcher Abstreifer merklich herabsetzen kann. Daran ändert auch die Maßnahme nichts, das Biegeverhalten der einzelnen Abstreiffinger durch Aussparungen zwischen den Abstreiffingern im Anschluss an den Abstreifbereich zu verbessern, weil die Reibungsmitnahme zwischen den einzelnen Abstreiffingern im Abstreifbereich nicht unterbunden werden kann.

Um das Anliegen von Abstreifern an das zu reinigende Förderband und damit die Reinigungswirkung zu verbessern, ist es darüber hinaus bekannt (DE 2 365 415 A, US 3 504 786 A, NL 7 200887 A), den Abstreifer aus einer Mehrzahl von Abstreifklingen aufzubauen, die jeweils für sich federnd an einem Träger gelagert sind und entweder je für sich oder über den Träger mit einer Federkraft beaufschlagt werden. Damit die gesamte Breite des Förderbandes von den Abstreifklingen erfasst wird, überlappen sich die Abstreiffinger in ihrer Breite. Zu diesem Zweck schließen sie mit der Trägerlängsrichtung einen spitzen Winkel ein oder sind quer zum Träger gegeneinander versetzt angeordnet. Mit einem gegenüber der Längsrichtung des Förderbandes geneigten Träger kann außerdem über die entsprechend unter einem Winkel ausgerichteten Abstreifklingen eine Förderkomponente auf das Abstreifgut quer zur Längsrichtung des Förderbandes ausgeübt werden. Nachteilig ist allerdings der vergleichsweise hohe Konstruktionsaufwand.

Der Erfindung liegt somit die Aufgabe zugrunde, einen Abstreifer der eingangs geschilderten Art vorzusehen, der selbst beim Vorhandensein von Querstollen oder Querstegen eine gute Reinigungswirkung mit sich bringt.

Die Erfindung löst die gestellte Aufgabe dadurch, dass die Abstreiffinger jeder Baueinheit quer zum Träger um ein die Fingerdicke übersteigendes Maß gegeneinander versetzt sind und dass die Stege der Baueinheiten in Abhängigkeit von der Fingerbreite und dem Versetzungsmaß der Abstreiffinger gegenüber dem Träger geneigt verlaufen.

Da die Abstreiffinger zufolge dieser Maßnahme quer zum Träger und damit in Förderrichtung des Förderbandes gegeneinander um ein Maß versetzt angeordnet sind, das die Fingerdicke, also die Erstreckung der Abstreiffinger in Bewegungsrichtung des zu reinigenden Trums des Förderbandes übersteigt, liegen die Abstreiffinger nicht aneinander an, obwohl sie quer zu dieser Bewegungsrichtung einen ununterbrochenen Abstreifbereich über die Breite des Förderbandes abdecken. Die nebeneinandergereihten, einander aber nicht überlappenden Abstreiffinger können unabhängig voneinander in Bewegungsrichtung des jeweiligen Bandtrums auch aneinander vorbei ausgelenkt werden, was eine vorteilhafte Anpassung des Abstreifers an das jeweilige Förderband gewährleistet und folglich eine wesentliche Voraussetzung für eine gute Reinigungswirkung darstellt. Diese voneinander unabhängige Auslenkmöglichkeit einer Vielzahl von Abstreiffingern wird dadurch sichergestellt, dass die Stege der nebeneinandergereihten und am Träger befestigten Baueinheiten in Abhängigkeit von der Fingerbreite und dem Versetzungsmaß der Abstreiffinger gegenüber dem Träger geneigt verlaufen. Bei einer solchen Anordnung der in Längsrichtung des Förderbands fortschreitenden gegenseitigen Versetzung der Abstreiffinger können die Abstreiffinger bei einer entsprechenden Auslenkung in der Bewegungsrichtung des zu reinigenden Bandtrums höchstens mit dem in dieser Bewegungsrichtung jeweils vorderen Abstreiffinger der Fingerreihe in Berührung kommen, was sich vorteilhaft auf das Biegeverhalten der einzelnen Abstreiffinger auswirkt.

Eine zusätzliche Maßnahme, die freie Auslenkung der Abstreiffinger zu vergrößern, ohne das gegenseitige Versetzungsmaß der Abstreiffinger zu ändern, besteht darin, die Abstreiffinger mit einer gegen ihre Rückseite abnehmenden Fingerbreite auszubilden. Die gegenüber der Vorderseite der Abstreiffinger geringere Fingerbreite auf ihrer Rückseite sichert wiederum einen größeren Auslenkwinkel der Abstreiffinger, bevor es zu einer Berührung mit einem nachfolgenden Abstreiffinger kommen kann.

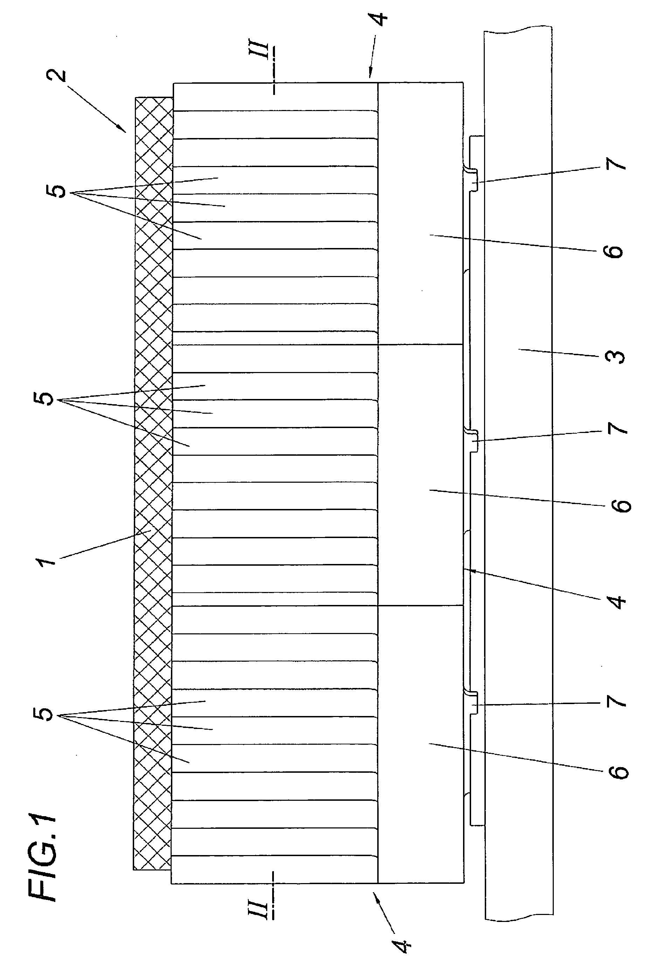

In der Zeichnung ist der Erfindungsgegenstand beispielsweise dargestellt. Es zeigen
- Fig. 1: einen erfindungsgemäßen Abstreifer für ein Förderband in einer schematischen Vorderansicht,
- Fig. 2: diesen Abstreifer in einem Schnitt nach der Linie II-II der Fig. 1 in einem größeren Maßstab und
- Fig. 3: den Abstreifer in einer schematischen Seitenansicht in einem größeren Maßstab.

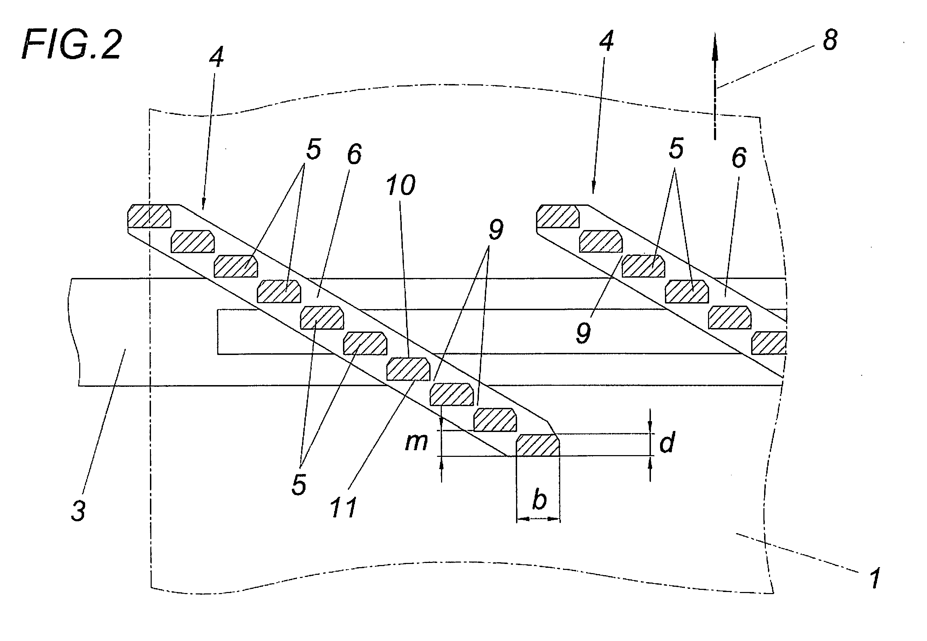

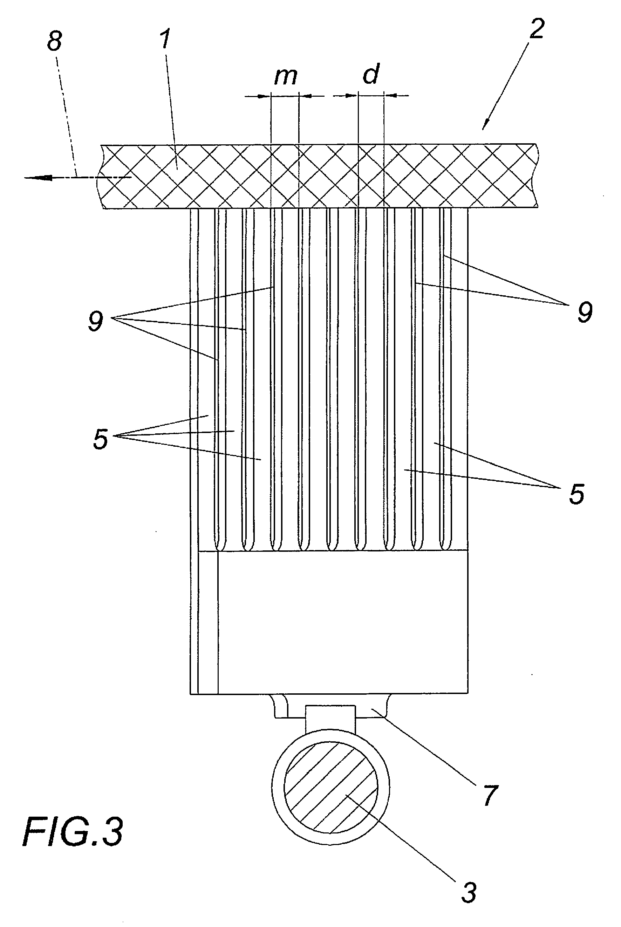

Der Abstreifer gemäß dem dargestellten Ausführungsbeispiel weist in herkömmlicher Weise einen quer zum abzustreifenden Trum 1 eines nicht näher dargestellten Förderbandes 2 verlaufenden Träger 3 für einzelne Baueinheiten 4 auf, die in Längsrichtung des Trägers 3 nebeneinandergereiht sich zu einem Abstreifer fügen, der sich über die Breite des Förderbands 2 erstreckt. Diese Baueinheiten 4 bilden jeweils in Längsrichtung des Trägers 3 nebeneinandergereihte, biegeelastische Abstreiffinger 5, die von einem gemeinsamen Steg 6 aufragen, der über eine Anschlusseinrichtung 7 lösbar mit dem Träger 3 verbunden ist. Die Anordnung ist dabei so getroffen, dass die Abstreiffinger 5 quer zur Trägerlängsrichtung, also in Bewegungsrichtung 8 des zu reinigenden Trums 1 des Förderbands 2 gegeneinander um ein Maß m versetzt sind, das die Dicke d der Abstreiffinger 5 übersteigt, sodass sich in Längsrichtung des Förderbandes 2 zwischen den aufeinanderfolgenden Abstreiffingern 5 ein Spalt 9 ergibt, wie dies insbesondere den Fig. 2 und 3 zu entnehmen ist. Obwohl die Abstreiffinger 5 der Baueinheiten 4 in Längsrichtung des Trägers 3 einen lückenlosen Abstreifbereich bilden, können die Abstreiffinger 5 aufgrund ihrer Versetzung quer zur Trägerlängsrichtung unabhängig voneinander in Bewegungsrichtung 8 des zu reinigenden Trums 1 des Förderbands 2 ausgelenkt werden, was eine wesentliche Voraussetzung für eine gute Reinigungswirkung darstellt. Das freie Auslenkmaß wird dabei vom Verhältnis des gegenseitigen Versetzungsmaßes m zur Fingerdicke d bestimmt. Die Neigung der Stege 6 gegenüber dem Träger 3 ergibt sich im Wesentlichen durch die Fingerbreite b und das Versetzungsmaß m, wie dies der Fig. 2 entnommen werden kann. Üblicherweise wird zwischen den Stegen 6 der Baueinheiten 4 und dem Träger 3 ein Neigungswinke im Bereich von etwa 30° eingehalten werden.

Um den von einem nachfolgenden Abstreiffinger 5 unbehinderten Auslenkwinkel der einzelnen Abstreiffinger 5 zu vergrößern, kann die Rückseite 10 der Finger 5 gegenüber der Vorderseite 11 eine geringere Breite aufweisen, indem sich die Abstreiffinger 5 gegen ihre Rückseite 10 hin gegenüber der Vorderseite 11 verjüngen, wie dies ebenfalls der Fig. 2 entnommen werden kann.

## Patentansprüche

1. Abstreifer für ein Förderband (2) mit einem quer zum Förderband (2) verlaufenden Träger (3) für in Trägerlängsrichtung nebeneinandergereihte Baueinheiten aus je einem Steg (6) und vom Steg (6) abstehenden, in Trägerlängsrichtung nebeneinandergereihten, biegeelastischen Abstreiffingern (5), wobei die Abstreiffinger (5) jeder Baueinheit (4) quer zum Träger (3) um ein die Fingerdicke (d) übersteigendes Maß (m) gegeneinander versetzt sind und dass die Stege (6) der Baueinheiten (4) in Abhängigkeit von der Fingerbreite (b) und dem Versetzungsmaß (m) der Abstreiffinger (5) gegenüber dem Träger (3) geneigt verlaufen.

2. Abstreifer nach Anspruch 1 oder 2, **dadurch gekennzeichnet, dass** die Abstreiffinger (5) eine gegen ihre Rückseite (9) abnehmende Fingerbreite (b) aufweisen.

## Claims

1. Scraper for a conveyor belt (2) having a support (3), extending transversely with respect to the conveyor belt (2), for structural units which are lined up next to each other in the longitudinal direction of the support and consist in each case of a web (6) and flexibly elastic scraper fingers (5) which protrude from the web (6) and are lined up next to each other in the longitudinal direction of the support, wherein the scraper fingers (5) of each structural unit (4) are offset with respect to each other transversely with respect to the support (3) by a degree (m) exceeding the finger thickness (d) and that the webs (6) of the structural units (4) extend in an inclined manner in dependence upon the finger width (b) and the degree of offset (m) of the scraper fingers (5) with respect to the support (3).

2. Scraper as claimed in claim 1 or 2, **characterised in that** the scraper fingers (5) have a finger width (b) which decreases towards their rear side (9).

## Revendications

1. Racleur pour une bande de convoyage (2) avec un support (3) disposé transversalement à la bande de convoyage (2) pour des modules alignés côte à côte dans le sens longitudinal du support, constitué respectivement d'une entretoise (6) et de doigts de raclage (5), élastiques en flexion, alignés côte à côte dans le sens longitudinal du support et dépassant de l'entretoise (6), les doigts de raclage (5) de chaque module (4) étant décalés les uns par rapport aux autres, transversalement au support (3), d'une cote (m) excédant l'épaisseur de doigt (d) et les entretoises (6) des modules (4) étant inclinées en fonction de la largeur de doigt (b) et de la cote de décalage (m) des doigts de raclage (5) par rapport au support (3).

2. Racleur selon la revendication 1 ou 2, **caractérisé en ce que** les doigts de raclage (5) présentent une largeur de doigt (b) plus petite au niveau de leur revers (9).
